# EUROPEAN PATENT SPECIFICATION

(11) **EP 1 784 463 B1**
(45) Date of publication and mention of the grant of the patent: **26.01.2011**
(21) Application number: 05794119.7
(22) Date of filing: 30.08.2005
(51) Int. Cl.: C09D 133/06, C09D 175/04, C09D 5/02, C09D 151/00

(54) **AQUEOUS COATING COMPOSITIONS BASED ON ACRYLATE COPOLYMERS**
WÄSSERIGE BESCHICHTUNGSZUSAMMENSETZUNGEN AUF BASIS VON ACRYLATCOPOLYMEREN
COMPOSITIONS DE REVÊTEMENT AQUEUX À BASE DE COPOLYMÈRES D'ACRYLATE

(30) Priority: 30.08.2004 US 605476 P
(43) Date of publication of application: 16.05.2007
(73) Proprietor: E.I. DU PONT DE NEMOURS AND COMPANY, Wilmington, DE 19898 (US)
(72) Inventor: BECKER, Wiebke, 45289 Essen (DE); DUECOFFRE, Volker, 42119 Wuppertal (DE); HENDRICKX, George, 2300 Keerbergen (DE); HUYBRECHTS, Josef, B-2300 Turnhout (BE); KLEUSER, Brigit, 42369 Wuppertal (DE); ROMMENS, Johan, 1742 Ternat (BE); VAES, Ann, B-B2500 Koningshooikt (BE)
(74) Representative: DuPont Performance Coatings Biering/Blum/Kimpel
(86) International application number: PCT/US2005/030989
(87) International publication number: WO 2006/026671

(56) References cited:
- US-A- 5 670 600
- US-A- 5 773 513
- US-A- 5 876 802

## Description

### BACKGROUND OF THE INVENTION

The invention relates to aqueous two-component coating compositions for automotive and industrial coatings based on hydroxy-functional acrylate copolymers and polyisocyanate cross-linking agents, which are preferably used in vehicle refinishing and coating large vehicles.

### DESCRIPTION OF RELATED ART

For ecological reasons water based paints are increasingly used in automotive and industrial coatings. The aim of this is to keep the proportion of organic co-solvents in the water based paints as small as possible. The water-dilutable binders, for example, acrylate copolymers, used in water paints are usually manufactured in organic solvents in a one or several step process. The solvents are at least partly distilled off at a later stage.

In U.S. 5,773,513 aqueous coating compositions based on water-dilutable acrylate resins are described, the acrylate resins being manufactured in several stages by polymerization in organic solvents. In this procedure, a mono-epoxy ester and organic solvent are introduced, in a first stage unsaturated acid-functional monomers, unsaturated hydroxy-functional monomers and vinyl aromatic monomers are added and polymerized and in a second stage the remaining unsaturated acid-functional monomers and, possibly, further unsaturated monomers are added and polymerised. One feed stream comprises 5-60% by weight of the unsaturated acid functional monomer, 40-95% by weight of the reaction product of a monoepoxyester and an unsaturated acid functional monomer, and 0-55% by weight of the other polymerisable compounds. After neutralization and transfer to the aqueous phase, surplus solvent is distilled off. But aqueous coating compositions based on these acrylate resins do not give the optimum balance of compatibility with hydrophobic polyisocyanates nor a good shelf stability and overall productivity in drying performance.

EP 1024184 is directed to two-step acrylic copolymers prepared by polymerizing a first hydrophobic monomer mixture with 0-2 wt.-% of acrylic acid and then a second hydrophilic monomer mixture with 5-30 wt.-% of acrylic acid. The copolymers can be cured with polyisocyanate hardeners. The copolymer dispersions as well as the coating compositions based on these copolymers show unfavorable solids viscosity and the copolymer dispersions show unfavorable compatibility with hydrophobic polyisocyanates.

EP 619 329 (U.S. 5,539,022) describes water-dilutable dispersions of acrylate copolymers having a hydroxyl number and an acid number, obtained by free-radical copolymerization in one step of a) from 5 to 40 parts by weight of at least one glycidyl ester of an aliphatic, saturated monocarboxylic acid which is branched in the alpha -position, b) from 0 to 30 parts by weight of at least one diester of an alpha, beta -olefinically unsaturated dicarboxylic acid, c) from 0 to 70 parts by weight of at least one vinyl aromatic hydrocarbon, where the molar amount of component c) is always greater than or equal to the molar amount of component b), d) from 0 to 60 parts by weight of an alkyl ester of an alpha,.beta -olefinically unsaturated carboxylic acid, e) from 2 to 40 parts by weight of at least one alpha,.beta -olefinically unsaturated carboxylic acid, where the molar amount of component e) is always greater than the molar amount of component a), f) from 5 to 40 parts by weight of at least one hydroxyalkyl ester of an alpha,.beta -olefinically unsaturated carboxylic acid. The dispersions are suitable as water-dilutable binders for stoving (baking) varnishes or stoving (baking) solid-colour topcoats containing melamine crosslinkers. However, the use of melamine crosslinkers in general necessitates the application of elevated baking temperatures, with the result that these aqueous coating materials are less suitable for the area of refinishing vehicles and instead are employed predominantly in the area of production-line finishing of automobiles and trucks.

EP 707 608 (U.S. 5,670,600) describes aqueous two-component polyurethane coating compositions comprising water-dilutable polyacrylate copolymers which are obtainable by polymerizing (a1) 20 to 60% by weight of a (meth)acrylic ester which is free of carboxyl groups, (a2) 10 to 40% by weight of an ethylenically unsaturated monomer having at least one hydroxyl group per molecule and is essentially free of carboxyl groups, (a3) 1 to 25% by weight of a vinyl esters of alpha-branched monocarboxylic acids having, 5 to 18 carbon atoms per molecule, (a4) 1 to 25% by weight at least one reaction product of acrylic acid and/or methacrylic acid with the glycidyl ester of an alpha.-branched monocarboxylic acid having 5 to 18 carbon atoms per molecule, (a5) 1 to 15% by weight an ethylenically unsaturated monomer which has at least one carboxyl group per molecule and (a6) 5 to 30% by weight of an ethylenically unsaturated monomer which is essentially free of carboxyl groups. These copolymers also show unfavorable compatibility with hydrophobic polyisocyanates.

Thus, there is a need for water-dilutable two-component coating compositions based on hydroxy-functional acrylate copolymers which are highly compatible with hydrophobic polyisocyanates, i. e., polyisocyanates that are not especially hydrophilically modified and are easily miscible with these copolymers. The miscibility should be guaranteed without having to add larger amounts of organic co-solvents and/or using high shear rates to obtain miscibility. Furthermore, the coatings compositions should give good stability and drying performance as well as satisfactory optical appearance, e.g., gloss and flow.

### SUMMARY OF THE INVENTION

The present invention relates to aqueous coating compositions comprising
A) at least one water-dilutable (meth)acrylate copolymer and
B) at least one polyisocyanate cross-linking agent with free isocyanate groups, wherein the (meth)acrylate copolymer comprise
   a) 20-60% by weight, of a reaction product of a monoepoxyester and an unsaturated acid functional monomer
   b) 10-30% by weight, of a hydroxy functional unsaturated monomer which is different from component a),
   c) 2-6% by weight, of an unsaturated acid functional monomer and
   d) 20-50% by weight, of other polymerisable unsaturated monomers, wherein the% by weight of components A) and B) and of components a) to d) is adding up to 100% by weight and wherein the water-dilutable (meth)acrylate copolymer is free of vinyl esters derived from branched saturated monocarboxylic acids in alpha position and wherein the (meth)acrylate copolymer is prepared by a skew feed polymerization process with at least two feed streams and wherein one feed stream comprises
      I) 60-100% by weight of the reaction product of a monoepoxyester and an unsaturated acid functional monomer a), based on the total amount of component a) in the copolymer,
      II) 0-60% by weight of the hydroxy functional unsaturated monomer b), based on the total amount of monomer b) in the copolymer,
      III) 0-30% by weight of the unsaturated acid functional monomer c) based on the total amount of monomer c) in the copolymer, and
      IV) 0-80% by weight of the other polymerisable unsaturated monomers d), based on the total amount of monomers d) in the copolymer,
         and wherein the remaining one or more feed streams comprise the balance of components a) to d), and wherein the first feed stream comprises 40-80% by weight of the total amount of monomers a) to d) and the second feed stream comprises 20-60% by weight of the total amount of monomers a) to d).

### DETAILED DESCRIPTION OF THE EMBODIMENTS

It has surprisingly been found that aqueous dispersions of (meth)acrylate copolymers A) show favorable solids viscosity, have good compatibility with polyisocyanates in waterborne systems and can be easily mixed with hydrophobic polyisocyanates, i.e., not specially hydrophilically modified polyisocyanates, to become coatings that have good optical appearance, e.g. good gloss and flow and good resistance to chemicals and moisture and mechanical influences that, for example, cause scratching and marring.

Hereafter the invention is described in more detail.

The term (meth)acrylic as used here and hereinafter should be taken to mean methacrylic and/or acrylic.

All molecular weights referred to herein are determined by GPC (gel permeation chromatographie) using polystyrene as the standard.

The coating composition of the present invention preferably comprises A) 30-95% by weight solids of a hydroxy and carboxy functional acrylic copolymer and B) 5-70% by weight solids of a curing agent with free isocyanate groups. The (meth)acrylate copolymers A) are prepared by a skew feed polymerization process with at least two feed streams. Skew feed polymerization as used herein means a multi-step reaction wherein products of previous reaction steps are combined with additional reactants in a sequential fashion to yield the desired copolymer. The preferred embodiment of this invention is a two-step skew feed polymerization wherein a first group of monomers are reacted to form an intermediate polymer and a second group of monomers are reacted in the presence of the intermediate polymer to form the copolymer used in this invention.

The water-dilutable (meth)acrylate copolymers A) typically has a hydroxy value of 30-250, an acid value of 15-50, and a number average molecular weight (Mn) of 1000-15000, and preferably has a hydroxy value of 60-150, an acid value of 5-35, and a number average molecular weight (Mn) of 1500-6000. The hydroxy functionality of the copolymer is provided by the reaction product of an unsaturated acid functional monomer and a monoepoxyester a) and optionally, by further hydroxy functional unsaturated monomers b). The copolymer is produced by radical polymerization of the aforementioned components a) to d).

Component a) relates to reaction products of monoepoxyesters and unsaturated acid functional compounds. These monoepoxy esters are preferably glycidyl esters derived from aliphatic saturated monocarboxylic acids with a tertiary or quaternary carbon atom in the alpha position. It is preferred to use glycidyl esters of saturated alpha, alpha-dialkylalkane-monocarboxylic acids with 5 to 13 C atoms in the acid molecule, in particular, preferably, 9 to 11 C atoms in the acid molecule. Examples of glycidylesters are the glycidyl esters derived from versatic acid and the glycidyl esters derived from pivalic acid. The glycidyl ester derived from versatic acid is particularly preferred. Suitable monoepoxyesters of this type are obtainable commercially, for example, under the name of Cardura^{®}. Examples of unsaturated acid functional compounds are aliphatic unsaturated monocarboxylic acids such as (meth)acrylic acid, crotonic acid and isocrotonic acid. Maleic acid, fumaric acid and derivatives therefrom can also be used, e.g., reaction products of maleic anhydride with monoalcohols leading to maleic acid half ester-acids. These half ester-acids can also be reacted with the monoepoxyesters. A preferred unsaturated acid functional compound is (meth)acrylic acid.

Further possible components a) are reaction products of tertiary fatty acids with up to 12 carbon atoms and epichlorohydrine as well as reaction products of epoxy functional unsaturated monomers, e.g., glycidyl (meth)acrylate, and acids, e.g., aliphatic saturated monocarboxylic acids with a tertiary or quaternary carbon atom in the alpha position.

Particularly preferred components a) are reaction products of glycidyl esters derived from versatic acid and (meth)acrylic acid.

Component a) is a hydroxy-functional polymerizable reaction product and can be formed during the course of production of the (meth)acrylate copolymers.

Component b) relates to hydroxy-functional olefinic unsaturated monomers, which are different from component a). Examples of component b) are hydroxyalkyl esters with primary or secondary hydroxyl groups derived from alpha, beta-olefinic unsaturated monocarboxylic acids. These can include, for example, hydroxyalkyl esters from acrylic acid, methacrylic acid, crotonic acid and/or iso-crotonic acid. Hydroxyalkyl esters derived from (meth)acrylic acid are preferred. The hydroxyalkyl groups can contain, for example, 1 to 10 C atoms, preferably 2 to 6 C atoms. Examples of suitable hydroxyalkyl esters of alpha, beta-olefinic unsaturated monocarboxylic acids with primary hydroxyl groups are hydroxyethyl (meth)acrylate, hydroxypropyl (meth)acrylate, hydroxybutyl (meth)acrylate, hydroxyamyl (meth)acrylate and hydroxyhexyl (meth)acrylate. Examples of suitable hydroxyalkyl esters with secondary hydroxyl groups are 2-hydroxypropyl (meth)acrylate, 2-hydroxybutyl (meth)acrylate and 3-hydroxybutyl (meth)acrylate.

Reaction products from hydroxyalkyl (meth)acylates with lactones can also be used for component b). In this way, at least part of the aforementioned hydroxyalkyl esters of alpha, beta-unsaturated monocarboxylic acids can be modified. The modification results from an esterification reaction taking place by opening the lactone ring. During the reaction, new hydroxyl groups are formed in the final phase in the form of hydroxyalkyl ester groups matching the appropriate lactone. The aforementioned are examples of hydroxyalkyl (meth)acrylates that can be used. Suitable lactones are, for example, those that contain 3 to 15 C atoms in a ring, it is possible for the rings to have different substituents. Preferred lactones are gamma-butyrolactone, delta-valerolactone, epsilon-caprolactone, beta-hydroxy-beta-methyl-delta-valerolactone, lambda-laurinlactone or mixtures thereof. Epsilon-caprolactone is particularly preferred. The reaction products preferred are those of one mol of a hydroxyalkyl ester of an alpha, beta-unsaturated monocarboxylic acid and 1 to 5 mol, preferably an average of 2 mols, of a lactone. Modification of the hydroxyl groups of the hydroxyalkyl esters with the lactone can take place before, during or after carrying out the copolymerization reaction.

Component c) relates to radical polymerizable olefinic unsaturated acid functional monomers. Examples of suitable components c) are polymerizable olefinic unsaturated carboxyl-functional monomers, such as, olefinic unsaturated mono- and/or dicarboxylic acids, e.g., (meth)acrylic acid, maleic acid, fumaric acid, crotonic acid and isocrotonic acid as well as the corresponding semi-esters and anhydrides of olefinic unsaturated dicarboxylic acids. The acid residue of these carboxylic acids has generally 1 to 8 C atoms. Unsaturated fatty acids with 8 to 22 C atoms can also be used, such as, for example, linolenic acid, linoleic acid, oleic acid or dehydrated castor acid. The use of (meth)acrylic acid is particularly preferred.

Strong acid functional monomers, such as, methacryloxy ethyl phosphonic acid, sulfoethyl methacrylate and vinyl phosphonic acid can also be used.

Component d) relates to olefinic unsaturated monomers, which differ from monomers a) to c). It can include olefinic unsaturated monomers that, apart from having at least one olefinic double bond, do not contain any other reactive functional groups. Examples of suitable unsaturated monomers with no other functional groups are esters of unsaturated carboxylic acids with aliphatic monohydric branched or linear as well as cyclic alcohols with 1 to 20 C atoms. Examples of unsaturated carboxylic acids are acrylic acid, methacrylic acid, crotonic acid and isocrotonic acid. Esters of (meth)acrylic acid are preferred. Examples of (meth)acrylic acid esters with aliphatic alcohols are methylacrylate, ethylacrylate, isopropylacrylate, tert.-butylacrylate, n-butylacrylate, isobutylacrylate, 2-ethylhexylacrylate, laurylacrylate, stearylacrylate and appropriate methylacrylates. Examples of (meth)acrylic acid esters with cyclic alcohols are cyclohexylacrylate, trimethylcyclohexylacrylate, 4-tert. butylcyclohexylacrylate, isobornylacrylate and appropriate methacrylates. Examples of (meth)acrylic acid esters with aromatic alcohols are benzyl(meth)acrylates.

Examples of further but not preferred suitable unsaturated monomers without other functional groups are vinyl esters, such as, for example, vinyl acetate, vinyl propionate and vinyl esters derived from branched saturated monocarboxylic acids in alpha position, for example, vinyl esters derived from saturated alpha, alpha' dialkylalkane monocarboxylic acids and vinyl esters derived from saturated alpha-alkylalkane monocarboxylic acids each with 5 to 13 carbon atoms, preferably, 9 to 11 carbon atoms in the molecule.

Small amounts of olefinic polyunsaturated monomers can also be used. These are monomers with at least 2 radically polymerizable double bonds. Examples of these are divinylbenzene, 1,4-butanediol diacrylate, 1,6-hexanediol diacrylate, neopentylglycoldimethacrylate, glycerine dimethacrylate.

Examples of further suitable unsaturated monomers without other functional groups are vinylaromatic monomers, for example, styrene, vinyl toluene and/or tertiary butyl styrene.

Component d) may also include olefinic unsaturated monomers with other functional groups, for example, (meth)acrylamides and their derivatives, (meth)acrylonitriles, silane-functional unsaturated monomers, such as, for example, methacryloxypropyl trialkoxysilanes, vinyl trialkoxysilanes, each with, for example, 1 to 5 carbon atoms in the alkoxy group, acetoacetyl-functional unsaturated monomers, such as, for example, acetoacetoxy ethylmethacrylate, unsaturated monomers containing urea groups, such as, for example, ethylene urea ethyl methacrylate and unsaturated monomers containing amino groups, such as, for example, dialkylamino ethyl (meth)acrylates with, for example, 1 to 5 carbon atoms in the alkyl group and heterocyclic monomers, e.g. vinyl imidazole.

Preferably the (meth)acrylate copolymer comprises as component d) esters of unsaturated carboxylic acids with aliphatic monohydric branched or linear as well as cyclic alcohols with 1 to 20 C atoms and/or vinylaromatic monomers. Preferably the (meth)acrylate copolymer is free of vinyl esters derived from branched saturated monocarboxylic acids in alpha position. When those vinyl esters are contained the copolymer dispersions show unsufficient storage stability.

A preferred (meth)acrylate copolymer comprises:
a) 20-60% by weight of at least one a reaction product of a monoepoxyester and (meth)acrylic acid
b) 10-30% by weight of at least one hydroxyalkyl ester with primary or secondary hydroxyl groups derived from alpha, beta-olefinic unsaturated monocarboxylic acids.
c) 2-6% by weight of at least one an unsaturated acid functional monomer and
d)
   d1) 10-25% by weight of at least one ester of (meth)acrylic acid with aliphatic monohydric branched or linear as well as cyclic alcohols with 1 to 20 C atoms and
   d2) 10-25% by weight of vinylaromatic monomers and
   d3) optionally other monomers which are different from monomers d1) and d2)
   wherein the % by weight of components a), b), c), d1), d2) and d3) is adding up to 100% by weight.

The hydroxy-functional (meth)acrylic copolymers contained in the coating compositions according to the invention are produced by radical copolymerization. Radical polymerization is following the usual method by a person skilled in the art.

More specifically, the (meth)acrylic copolymers used in this invention are preferably made by first charging a reflux reactor with a monoepoxyester and an organic solvent or solvent blend. The temperature of the reactor contents is typically held between 60°C and 280°C during polymerization. For example a first feed stream comprising a mixture of a first quantity of unsaturated acid-functional monomer, in an equivalent amount to react with monoepoxyester and build the reaction product of monoepoxyester and unsaturated acid-functional monomer, a hydroxyfunctional monomer, further unsaturated monomers, and an initiator is charged to the reactor over a period of time. After addition of the first feed stream, the reactor contents are rinsed with additional organic solvent. A second feed stream comprising for example a second quantity of the unsaturated acid-functional monomer, in an amount to provide the copolymer with the desired acid number, further unsaturated monomers, additional organic solvent, and additional initiator is charged to the reactor over a period of time.

It is essential for the present invention to prepare the (meth)acrylate copolymers A) by a skew feed polymerization process with at least two feed streams, preferably with two feed streams. The total amount of unsaturated acid-functional monomer c) and reaction product of monoepoxyester and unsaturated acid-functional monomer a) can be varied between the first and second feed streams, but it is essential that the first feed stream comprises the main quantity, namely 60-100% by weight of the reaction product of a monoepoxyester and an unsaturated acid functional monomer a), based on the total amount of monomer a) and the lower amount of unsaturated acid functional monomer c), namely, 0-30% by weight of the unsaturated acid functional monomer c) based on the total amount of monomer c) and optionally other polymerisable compounds b) and d).

The first feed stream comprises 40-80% by weight of the total amount of monomers a) to d) and the second feed stream comprises 20-60% by weight of the total amount of monomers a) to d).

After addition of the second feed stream, which comprises the remaining % by weight of each component the reactor contents are typically rinsed with additional organic solvent, held for a period of time at reflux, and rinsed a final time with additional organic solvent. The reactor contents are cooled and then partially or wholly, neutralized by the addition of the appropriate amount of a base and converted into an aqueous dispersion by normal or inverse dilution with water. The individual monomers a) to d) are each introduced in such molar amounts that the finished (meth)acrylate copolymer has the hydroxyl and acid numbers defined at the beginning.

All usual polymerization initiators for radical copolymerization can be considered, such as, aliphatic azo compounds, for example, azobisisobutyronitrile or azobis-methylbutyronitrile, diazylperoxides, for example, dibenzoylperoxide, dialkylperoxides, for example, di-tertiary-butylperoxide or di-tertiary-amylperoxide, alkylhydroperoxides, for example, tertiary-butylhydroperoxide or peresters, for example, tertiary-butylperoxybenzoate. Regulators, for example alcohols, such as, butanol or mercaptanes, such as, dodecylmercaptane, can be used to regulate the molar mass.

Suitable organic co-solvents are *inter alia* water-dilutable monovalent or bivalent alcohols or glycols, for example, ethanol, n-propanol, isopropanol, n-butanol, isobutanol, ethylene glycol, diethylene glycol, triethylene glycol, propylene glycol and glycerine, water-dilutable monoethers derived from polyhydric alcohols, for example methoxypropanol or methoxybutanol, as well as water-dilutable glycol ethers, such as, for example, butylglycol or butyldiglycol.

The aqueous coating compositions, according to the invention, also contain polyisocyanates with free isocyanate groups (component B) as cross-linking agents. Examples of the polyisocyanates are any number of organic polyisocyanates with aliphatically, cycloaliphatically, araliphatically and/or aromatically bound free isocyanate groups. The polyisocyanates are liquid at room temperature or become liquid through the addition of organic solvents. At 23°C, the polyisocyanates generally have a viscosity of 1 to 6,000 mPas, preferably, above 5, and below 3,000 mPas.

These polyisocyanates are familiar to the person skilled in the art and can be obtained commercially.

The preferred polyisocyanates are polyisocyanates or polyisocyanate mixtures with exclusively aliphatically and/or cycloaliphatically bound isocyanate groups with an average NCO functionality of 1.5 to 5, preferably 2 to 4.

Examples of particularly suitable polyisocyanates are what are known as "paint polyisocyanates" based on hexamethylene diisocyanate (HDI), 1-isocyanato-3,3,5-trimethyl-5-isocyanatomethyl-cydohexane (IPDI) and/or bis(isocyanatocyclohexyl)-methane and the derivatives known *per se*, containing biuret, allophanate, urethane and/or isocyanurate groups of these diisocyanates which, following production, are freed from surplus parent diisocyanate, preferably by distillation, with only a residue content of less than 0.5% by weight. Triisocyanates, such as, triisocyanatononan can also be used.

Sterically hindered polyisocyanates are also suitable. Examples of these are 1,1,6,6-tetramethyl-hexamethylene diisocyanate, 1,5-dibutyl-penta-methyldiisocyanate, p- or m-tetramethylxylylene diisocyanate and the appropriate hydrated homologues.

In principle, diisocyanates can be converted by the usual method to higher functional compounds, for example, by trimerization or by reaction with water or polyols, such as, for example, trimethylolpropane or glycerine.

The polyisocyanate cross-linking agents can be used individually or mixed.

These are polyisocyanate cross-linking agents commonly used in the paint industry, and are described in detail in the literature and are also obtainable commercially.

The polyisocyanates can also be used in the form of isocyanate-modified resins.

Although not preferred, the polyisocyanates can be used in combination with co-crosslinkers, e.g., in combination with melamine resins and/or blocked polyisocyanates.

It is an advantage of the aqueous coating composition of the present invention that hydrophobic polyisocyanates, which are not modified with hydrophilic groups, can be used as crosslinkers. It is a general problem that hydrophilic polyisocyanates (e.g. modified with polyether groups) which guarantee a good compatibility and miscibility with hydroxy binders in aqueous coating compositions on the other hand cause unsufficient water and chemical resistance of the respective coatings.

Apart from the hydroxy-functional (meth)acrylic copolymers A), the coating compositions according to the invention can also contain other hydroxy-functional binders. Examples of these other hydroxy-functional binders are those hydroxy-functional binders known to the person skilled in the art, which are used in the formulation of aqueous coatings. Examples of other hydroxy-functional binders which can be used are hydroxy-functional polyester, alkyd, polyurethane and/or poly(meth)acrylate resins different from the (meth)acrylic copolymers A). These other hydroxy-functional binders can also be present in a modified form, for example, in the form of (meth)acrylated polyesters or (meth)acrylated polyurethanes. They can be used individually or mixed. The proportion of other hydroxy-functional binders can amount to 0 to 50% by weight based on the amount of hydroxy-functional (meth)acrylic copolymers according to the invention which is used. The coating compositions can also contain low molecular reactive components, so-called reactive thinners, which are able to react with the cross-linking components. Examples of these are hydroxy- or aminofunctional reactive thinners.

The hydroxy-functional (meth)acrylic copolymers A) and the polyisocyanates B) are used in such proportion that the equivalent ratio of hydroxyl groups of (meth)acrylic copolymers A) to the isocyanate groups of cross-linking components B) can be 5:1 to 1:5, for example, preferably, 3:1 to 1:3, and in particular, preferably, 1.5:1 to 1:1.5. If other hydroxy-functional binders and reactive thinners are used, their reactive functions should be taken into account when calculating the equivalent ratio.

The coatings, according to the invention, contain water, for example, 40-70% by weight and possibly small amounts of organic solvents, e.g., up to 10.% by weight, based on the entire coating composition. These are organic solvents used in the paint industry known to the person skilled in the art, for example, those which were mentioned previously in the production of the polymers.

The coating compositions, according to the invention, can contain pigments and/or fillers. All colour and/or special effect-giving pigments of organic or inorganic type used in paints are suitable for pigments. Examples of inorganic or organic colour pigments are titanium dioxide, micronized titanium dioxide, iron oxide pigments, carbon black, azo pigments, phthalocyanine pigments, quinacridone or pyrrolopyrrole pigments. Examples of special effect pigments are metal pigments, for example, from aluminium or copper, interference pigments, such as, for example, aluminium coated with titanium dioxide, coated mica, graphite effect pigments and iron oxide laminae. Examples of fillers are silicon dioxide, barium sulphate, talcum, aluminium silicate and magnesium silicate.

The coating compositions can contain usual additives. These additives are additives usually used in the paint industry. Examples of such additives are light stabilisers, for example, based on benztriazoles and HALS (hindered amine light stabilizer) compounds, flow control agents based on (meth)acrylic homopolymers or silicon oils, rheology-influencing agents, such as, highly disperse silicic acid or polymeric urea compounds, thickeners, such as, cross-linked polycarboxylic acid or polyurethanes, anti-foaming agents, wetting agents, curing accelerators for the cross-linking reaction of OH-functional binders, for example, organic metallic salts, such as, dibutyl tin dilaurate, zinc naphthenate and compounds containing tertiary amino groups, such as, triethylamine for the cross-linking reaction with polyisocyanates. The additives are added in the usual amounts familiar to the person skilled in the art.

Either transparent or pigmented coating compositions can be produced. Since this is a two-component system, the binder components A) containing hydroxyl groups, possibly with pigments, fillers and additives generally used for paint, and the polyisocyanate components B) may only be mixed together shortly before application. In principle, the coatings can still be adjusted to spray viscosity with water and/or organic solvents prior to application.

The coating compositions, according to the invention, can be applied using known methods, in particular, by spray application. The coating compositions obtained can be cured at room temperature or forced at higher temperatures, for example, up to 80°C. They can, however, even be cured at higher temperatures of, for example, 80 to 160°C.

The coating compositions, according to the invention, are suitable for automotive and industrial coatings. In the automotive coatings sector, the coatings can be used for both vehicle production line painting and vehicle and vehicle part refinishing. For vehicle production line painting stoving (baking) temperatures of 80 to 160°C, for example, are used, preferably 110 to 140°C. For refinishing curing temperatures of, for example, 20°C to 80°C, in particular, 40 to 60°C are used. The coating compositions can also be used for coating large vehicles and transportation vehicles, such as trucks, busses and railroad cars, where typically curing temperatures of up to 80°C are used.

The coating compositions according to the invention are suited for use as clear coats but can be pigmented with conventional pigments and used as solid-color topcoats, basecoats or undercoats such as primer or sealer. Preferably they can be formulated, as solid-color topcoats or as transparent clear coats and used in the manufacture of the outer solid-color topcoat layer of a multilayer coating or in the production of the outer clear coat layer of a multilayer coating. The present invention thus also concerns the use of the coating compositions, according to the invention, as topcoat coatings and as clear coatings as well as a method for producing multilayer coatings, the solid-color topcoat and transparent clear coat layers of multilayer coatings, in particular being manufactured from the coating compositions, according to the invention.

The coating compositions in the form of a solid-color topcoat can be applied, for example, to normal one-component or two-component filler layers. However, the coatings according to the invention can also be applied and cured as a filler layer, for example, on normal primers, for example, two-component epoxide primers or on electrodeposition primers.

The coating compositions in the form of transparent clear coats can be applied, for example, using the wet-in-wet process on solvent-based or aqueous color and/or effect-giving basecoat layers. In this case, the color and/or effect-giving basecoat layer is applied to a substrate, precoated if necessary, in particular, to precoated vehicle bodies or parts thereof, prior to the application of the clear coat layer from the clear coat according to the invention. Following a drying period, if allowed for, both layers are cured together. Thus, for vehicle production line painting, drying can take place, for example, at 20 to 80°C and for refinishing for 15 to 45 minutes at room temperature, depending on relative air humidity.

The coating compositions according to the invention are used to advantage in a multilayer coating to produce solid-color topcoat layers and transparent clear coat layers. The topcoat and clear coat layers possess good resistance to mechanical and weathering influences and exhibit good chemical resistance. The copolymer dispersions used in the present invention have a favorable solids viscosity and accordingly the coating compositions according to the invention based on those copolymer dispersions have a sufficiently high solids content at spray viscosity, for example, a solids content of up to 40-45% by weight. They contain only small amounts of organic co-solvents, usually not more than 10% by weight. The water-dilutable (meth)acrylate copolymers A) used in the aqueous coatings can be particularly used to advantage with the usual hydrophobically, i.e., not especially hydrophilically modified polyisocyanate cross-linking agents. They are highly compatible with these polyisocyanate cross-linking agents and, simply by mixing with these, can be converted into water-dilutable two-component coating compositions. This is particularly important for such applications of two-component coating compositions, e.g., in vehicle refinishing, where it should be ensured that components can be mixed simply by hand. On the other hand good compatibility and miscibility with polyisocyanates lead to coatings with satisfactory surface properties, such as, gloss and flow. It is known from prior art that normal paint polyisocyanates, which are relatively hydrophobic, i.e., not specially hydrophilically modified, can only be worked or mixed into aqueous coating compositions with difficulty, particularly if the working in takes place in the absence of large amounts of organic co-solvents and/or without high shear rates.

The invention will be further described by reference to the following Examples. All parts and percentages are on a weight basis unless otherwise indicated. All molecular weights disclosed herein are determined by GPC (gel permeation chromatography) using a polystyrene standard.

### EXAMPLES

### EXAMPLE 1

### Preparation of Acrylic Copolymer Dispersion 1

In a reactor with a propeller type of stirrer, a thermometer, condenser and monomer/initiator feeding system, 200 grams of Cardura^{®} E10 (CE10) (Glycidylester of C10 versatic acid available from Resolution) and 40 grams of ethoxypropanol (EPR) were loaded and heated to about 150°C. A mixture of 52 grams of 2-Hydroxyethyl methacrylate (HEMA), 160 grams of Styrene (S), 68 grams of acrylic acid (AA), 10 grams of Dicumylperoxide (DCP), 40 grams of Cardura^{®} E10 and 10 grams of EPR were added over 2 hours 30 minutes to the reactor while keeping the contents at 150°C. After the feed, the reactor contents were held for 30 minutes. After the 30 minutes hold period, 108 grams of HEMA, 30.4 grams of AA, 141.6 grams of n-Butyl Methacrylate (BMA), 5 grams of DCP and 25 grams of EPR were added over 2 hours and 30 minutes at about 150°C followed by a rinsing step for the feed system of 5 grams of EPR. After the rinsing step, the contents of the reactor were held for 2 hours at 150°C. In a next step, 33 grams of dimethylamino ethanol (DMEA) were added for a theoretical acid value of 29.5, the amount corrected for the measured acid value.

The polymer blend was diluted with 865 grams of water preheated at about 70°C.

### Test results:

| | |
|---|---|
| Solids | 44.8% |
| Viscosity | 8800 cps |
| Acid value | 33.6 mg KOH/g |
| pH | 8 |
| Mn | 3700 |
| Mw | 24500 |

### EXAMPLE 2

### Preparation of Acrylic Copolymer Dispersion 2

In a reactor equipped with a propeller type of stirrer, a thermometer, condenser and monomer/initator feeding system, 200 grams of CE10 and 90 grams of EPR were loaded and heated to about 150°C. A mixture of 52 grams of HEMA, 160 grams of S, 68 grams of AA, 10 grams of DCP, 40 grams of CE10 and 40 grams of EPR were added over 2 hours 30 minutes to the reactor while keeping the contents at 150°C. After the feed, the reactor contents were held for 30 minutes. After the 30 minutes hold period, 108 grams of HEMA, 30.4 grams of AA, 141.6 grams of Isobutyl Methacrylate (IBMA), 5 grams of DCP and 45 grams of EPR were added over 2 hours and 30 minutes at about 150°C followed by a rinsing step for the feed system of 5 grams of EPR. After the rinsing step, the contents of the reactor were held for 2 hours at 150°C. The reactor contents were cooled to 100°C and 100 parts of EPR were distilled off. In a next step 33 grams of dimethylamino ethanol (DMEA) were added for a theoretical acid value of 20.5, the amount corrected for the measured acid value:

The polymer blend was diluted with 865 grams of water preheated at about 70°C.

### Test results:

| | |
|---|---|
| Solids | 45.1% |
| Viscosity | 3500 cps |
| Acid value | 33.6 mg KOH/g |
| pH | 8.2 |
| Mn | 4500 |
| Mw | 17500 |

### EXAMPLE 3

### Preparation of Acrylic Copolymer Dispersion 3 (See Example 2. no Stripping Step)

In a reactor equipped with a propeller type of stirrer, a thermometer, condenser and monomer/initiator feeding system, 200 grams of CE10 and 40 grams of EPR were loaded and heated to about 150°C. A mixture of 52 grams of HEMA, 160 grams of S, 68 grams of AA, 10 grams of DCP, 40 grams of CE10 and 10 grams of EPR were added over 2 hours 30 minutes to the reactor while keeping the contents at 150°C. After the feed, the reactor contents were held for 30 minutes. After the 30 minutes hold period, 108 grams of HEMA, 30.4 grams of AA, 141.6 grams of IBMA, 5 grams of DCP and 25 grams of EPR were added over 2 hours and 30 minutes at about 150°C following by a rinsing step for the feed system of 5 grams of EPR. After the rinsing step, the contents of the reactor were held for 2 hours at 150°C. In a next step, 33 grams of DMEA were added for a theoretical acid value of 29.5, the amount corrected for the measured acid value. The polymer blend was diluted with 865 grams of water preheated at about 70°C.

### Test results:

| | |
|---|---|
| Solids | 44.2% |
| Viscosity | 72 cps |
| Acid value | 35mg KOH/g |
| pH | 7.9 |
| Mn | 39 |
| Mw | 18700 |

### EXAMPLE 4

### Preparation of Acrylic Copolymer Dispersion

In a reactor equipped with a propeller type of stirrer, a thermometer, condenser and monomer/initiator feeding system, 200 grams of CE10 and 40 grams of EPR were loaded and heated to about 150°C. A mixture of 52 grams of HEMA, 160 grams of S, 68 grams of AA, 20 grams of DCP, 40 grams of CE10 and 10 grams of EPR were added over 2 hours 30 minutes to the reactor keeping the contents at 150°C. After the feed, the reactor contents were held for 30 minutes. After the 30 minutes hold period, 108 grams of HEMA, 30.4 grams of AA, 100.8 grams of IBMA, 40 grams of n-butyl acrylate (BA), 5 grams of DCP and 25 grams of EPR were added over 2 hours and 30 minutes at about 150°C followed by a rinsing step for the feed system of 5 grams of EPR. After the rinsing step, the contents of the reactor were held for 2 hours at 150°C. Next, the reactor was cooled to 100 °C. In a next step, 33 grams of DMEA were added for a theoretical acid value of 29.5, the amount corrected for the measured acid value.

In a next step, the polymer blend was diluted with 865 grams of water preheated at about 70°C.

### Test results:

| | |
|---|---|
| Solids | 43.2% |
| Viscosity | 3600 cps |
| Acid value | mg KOH/g |
| pH | 8.3 |
| Mn | 5600 |
| Mw | 39000 |

### EXAMPLE 5

### Preparation of Acrylic Copolymer Dispersion 5

In a reactor equipped with a propeller type of stirrer, a thermometer, condenser and monomer/initiator feeding system, 240 grams of CE10 and 120 grams of EPR were loaded and heated to about 150°C. A mixture of 52 grams of 2-Hydroxyethyl Acrylate (HEA), 160 grams of S, 68 grams of AA, 10 grams of di-tertiary-butylperoxide (DTBP) and 40 grams of EPR were added over 2 hours 30 minutes. After the 30 minutes hold period, 89.6 grams of HEA, 30.4 grams of AA, 160 grams of Isobutyl acrylate (IBA), 5 grams of DTBP and 20 grams of EPR were added over 2 hours and 30 minutes at about 150°C followed by a rinsing step for the feed system of 5 grams of EPR. After the rinsing step, the contents of the reactor were held for 3 hours at 150°C. The contents of the reactor were cooled to 60°C and the EPR was stripped off under a vacuum of about 30 millibar while gradually heating to 120°C. In a next step, the binder was cooled to 100°C and 33 grams of DMEA were added for a theoretical acid value of 29.5, the amount corrected for the measured acid value.

The polymer blend was diluted with 737 grams of water preheated at about 70°C.

### Test results:

| | |
|---|---|
| Solids | 43.2% |
| Viscosity | 2740 cps |
| Acid value | 30.5 mg KOH/g |
| pH | 7.9 |
| Mn | 4400 |
| Mw | 32600 |

### Comparative Example 1

### Preparation of Acrylic copolymer dispersion 1 (as example 2 but prepared in one step according U.S. 5,539,022)

In a reactor equipped with a propeller type of stirrer, a thermometer, condenser and monomer/initiator feeding system, 200 grams of CE10 and 40 grams of EPR were loaded and heated to about 150°C. A mixture of 160 grams of HEMA, 141.6 grams of IBMA, 160 grams of S, 98.4 grams of AA, 10 grams of DCP, 40 grams of CE10 and 10 grams of EPR were added over 5 hours to the reactor while keeping the contents at 150°C. After the feed, a rinsing step of 5 grams of EPR were added and the reactor contents were kept at 150°C. In a next step, 33 grams of DMEA were added for a theoretical acid value of 29.5, the amount corrected for the measured acid value.

The polymer blend was diluted with 865 grams of water preheated at about 70°C.

The aqueous polymer dispersion has an unfavorable solids viscosity.

### Test results:

| | |
|---|---|
| Solids | 44.2% |
| Viscosity | 13800 cps |
| Acid value | 33.2 mg KOH/g |
| pH | 8.6 |
| Mn | 4000 |
| Mw | 17400 |

### Comparative Example 2

Acrylic copolymer dispersion 2 (close to example 2 but using the teaching of U.S. 5,670,600 with part of the AA-CE10 replaced by VEOVA 10)

In a reactor equipped with a propeller type of stirrer, a thermometer, condenser and monomer/initiator feeding system, 112 grams of CE10 and 112 grams of VEOVA 10 (vinyl ester of Versatic acid 10 available from Resolution) and 90 grams of EPR were loaded and heated to about 150°C. A mixture of 52 grams of HEMA, 160 grams of S, 44 grams of AA, 10 grams of DCP, 40 grams of CE10 and 40 grams of EPR were added over 2 hours 30 minutes to the reactor while keeping the contents at 150°C. After the feed, the reactor contents were held for 30 minutes. After the 30 minutes hold period, 108 grams of HEMA, 30.4 grams of AA, 141.6 grams of IBMA, 5 grams of DCP and 45 grams of EPR were added over 2 hours and 30 minutes at about 150°C followed by a rinsing step for the feed system of 5 grams of EPR. After the rinsing step the contents of the reactor were held for 2 hours at 150°C. The contents of the reactor were cooled to 100°C and 100 parts of EPR were distilled off. In a next step, 33 grams of DMEA were added for a theoretical acid value of 29.5, the amount corrected for the measured acid value.

The polymer blend was diluted with 1022 grams of water preheated at about 70°C.

### Test results:

| | |
|---|---|
| Solids | 40.9% |
| Viscosity | 480 cps |
| Acid value | 33.9 mg KOH/g |
| pH | 8.6 |
| Mn | 4400 |
| Mw | 14000 |

After 1 week oven stability at 40°C the dispersion phase separated.

### Comparative Example 3

Preparation of Acrylic copolymer dispersion 3 close to example 2 but using the teachings of U.S. 5,670,600 with part of the AA-CE10 replaced by 2-Ethylhexyl Methacrylate (EHMA) and the total amount of AA-CE10 adduct less than 25%

In a reactor equipped with a propeller type of stirrer, a thermometer, condenser and monomer/initiator feeding system, 112 grams of CE10 and 90 grams of EPR were loaded and heated to about 150°C. A mixture of 52 grams of HEMA, 160 grams of S, 112 grams of EHMA, 44 grams of AA, 10 grams of DCP, 40 grams of CE10 and 40 grams of EPR were added over 2 hours 30 minutes while keeping the contents at 150°C. After the feed, the reactor contents were held for 30 minutes. After the 30 minutes hold period, 108 grams of HEMA, 30.4 grams of AA, 141.6 grams of IBMA, 5 grams of DCP and 45 grams of EPR were added over 2 hours and 30 minutes at about 150°C followed by a rinsing step for the feed system of 5 grams of EPR. After the rinsing step the contents of the reactor were held for 2 hours at 150°C. The reactor contents were cooled to 100°C and 100 parts of EPR were distilled off. In a next step, 33 grams of DMEA were added for a theoretical acid value of 29.5, the amount corrected for the measured acid value.

The polymer blend was diluted with 865 grams of water preheated at about 70°C.

### Test results:

| | |
|---|---|
| Solids | 44.8% |
| Viscosity | 1260 cps |
| Acid value | 34.8 mg KOH/g |
| pH | 7.9 |
| Mn | 4400 |
| Mw | 13000 |

After 1 week oven stability at 40°C the dispersion phase separated.

### Comparative Example 4

Preparation of Acrylic copolymer dispersion 4 (close to example 2 but the excess of AA used in the feed 2 localized in the feed where the AA-CE10 adduct is formed according to U.S. 5,773,513).

In a reactor equipped with a propeller type of stirrer, a thermometer, condenser and monomer/initiator feeding system, 200 grams of CE10 and 80 grams of EPR were loaded and heated to about 150°C. A mixture of 21.6 grams of HEMA, 160 grams of S, 112 grams of EHMA, 98.4 grams of AA, 10 grams of DCP, 40 grams of CE10 and 10 grams of EPR were added over 2 hours 30 minutes to the reactor while keeping the contents at 150°C. After the feed, the reactor contents were held for 30 minutes. After the 30 minutes hold period, 138.4 grams of HEMA, 141.6 grams of IBMA, 5 grams of DCP and 30 grams of EPR were added over 2 hours and 30 minutes at about 150°C followed by a rinsing step for the feed system of 5 grams of EPR. After the rinsing step the contents of the reactor were held for 2 hours at 150°C. The reactor contents were cooled to 100°C and 50 parts of EPR were distilled off. In a next step, 33 grams of DMEA were added for a theoretical acid value of 29.5, the amount corrected for the measured acid value.

The polymer blend was diluted with 1022 grams of water preheated at about 70°C.

### Test results:

| | |
|---|---|
| Solids | 39.8% |
| Viscosity | 3500 cps |
| Acid value | 34.2 mg KOH/g |
| pH | 8.6 |
| Mn | 5800 |
| Mw | 65000 |

The properties of the water borne dispersions prepared above were evaluated in two component (2K) pigmented topcoats and clear coats.

The following pigment dispersions were used for preparation of the pigmented topcoats:

| Code | Composition |
|---|---|
| Dispersion 1.1 | 20 parts of Hostaperm^{®} blue BT617D from Clariant |
| | 10 parts of a dispersing agent as described in Patent U.S. 5,231,131 |
| | 0.4 parts of a wetting agent (Surfynol^{®} 104 from Air Products) |
| | 2 parts of AMP95 (amino methyl propanol from Dow) |
| | 67.6 parts of water |
| Dispersion 1.2 | 25 parts of Hostaperm^{®} violet RL spez from Clariant |
| | 20 parts of a dispersing agent as described in Patent U.S. 5,231,131 |
| | 0.3 parts of a wetting agent (Surfynol^{®} 104 from Air Products) |
| | 1 parts of AMP95 |
| | 5 parts of Dowanol DPM (dipropylene glycol methyl ether from Dow) |
| | 48.7 parts of water |
| Dispersion 1.3 | 10 parts of Raven^{®} 5000 from Columbian Chemicals |
| | 16 parts of a dispersing agent as described in Patent U.S. 5,231,131 |
| | 0.3 parts of a wetting agent (Surfynol^{®} 104 from Air Products) |
| | 1.8 parts of AMP95 |
| | 71.9 parts of water |
| Dispersion 1.4 | 73 parts of TiPure^{®} R706 from DuPont |
| | 8.3 parts of a dispersing agent as described in Patent U.S. 5,231,131 |
| | 1.5 parts of a wetting agent (Surfynol^{®} 104 from Air Products) |
| | 1.7 parts of AMP95 |
| | 3 parts of Dowanol DPM |
| | 12.5 parts of water |
| Dispersion 1.5 | 52.5 parts of Bayferrox^{®} 3920 from Bayer |
| | 28.9 parts of a dispersing agent as described in Patent U.S. 5,231,131 |
| | 0.75 parts of a wetting agent (Surfynol^{®} 104 from Air Products) |
| | 3.8 parts of AMP95 |
| | 7.5 parts of Dowanol DPM |
| | 6.55 parts of water |

### Paint Example 1

### Water borne 2K blue topcoat

A blue topcoat formulation was prepared by mixing 69.9 parts of acrylate copolymer dispersion 3 with 0.1 parts of a wetting agent (Byk^{®} 380N (Byk Chemie)) and 0.5 parts of a defoaming agent (Byk^{®} 011 (Byk Chemie). To this mixture, 8.1 parts of dispersion 1.1, 3.7 parts of dispersion 1.2, 1.6 parts of dispersion 1.3 and 6.4 parts of dispersion 1.4 were added and mixed. To this blend 10 parts water were added and mixed in.

An activator solution was prepared by blending 65.3 parts of Desmodur^{®} N 3600 (100% solids hexamethylenediisocyanate trimer from Bayer) with 34.7 parts of butyl glycol acetate.

100 parts of the above mentioned topcoat were mixed with 27.4 parts of the activator. The topcoat was sprayed on an electrocoated steel panel with commercial primer surfacer and baked for 30 minutes at 80°C.

### Paint Example 2

### Water borne 2K blue topcoat

A blue topcoat formulation was prepared by mixing 72.1 parts acrylate copolymer dispersion 1 with 0.1 parts of a wetting agent (Byk^{®} 380N (Byk Chemie)) and 0.5 parts of a defoaming agent (Byk^{®} 011 (Byk Chemie). To this mixture, 8.4 parts of dispersion 1.1, 3.9 parts of dispersion 1.2, 1.6 parts of dispersion 1.3 and 6.7 parts of dispersion 1.4 were added and mixed. To this blend 6.7 parts water were added and mixed in.
An activator solution was prepared by blending 65.3 parts of Desmodur^{®} N 3600 (100% solids hexamethylenediisocyanate trimer from Bayer) with 34.7 parts of butyl glycol acetate.

100 parts of the above mentioned topcoat were mixed with 28.5 parts of the activator. The topcoat was sprayed on an electrocoated steel panel with commercial primer surfacer and baked for 30 minutes at 80°C.

The table below shows an overview of the physical properties of coating films:

| | **Paint Example 1** | **Paint Example 2** |
|---|---|---|
| Dry film thickness | | |
| Primer | 30-35 µm | 30-35 µm |
| Topcoat | 54 µm | 55 µm |
| % spraysolids | 44.9% | 46.6% |
| | | |
| Gloss20° | 81.3 | 82.7 |
| DOI | 71.4 | 91.9 |
| haze du | 38.2 | 7.0 |
| | | |
| Fischer hardness measured on glass (DFT 40 µm), baked 30 minutes at 80°C | | |
| 1 hour after bake | 12.6 | 11.8 |
| 1 week after bake | 14.1 | 14.1 |

Both paint examples 1 and 2 gave excellent chipping resistance and no blistering was observed after 2 weeks humidity cabinet.

### Paint Example 3

### Water borne 2K white topcoat

A white topcoat formulation was prepared by mixing 59.72 parts acrylate copolymer dispersion 3with 0.1 parts of a wetting agent (Byk^{®} 380N (Byk Chemie)) and 0.5 parts of a defoaming agent (Byk^{®} 011 (Byk Chemie). To this mixture, 28.59 parts of dispersion 1.4, 0.36 parts of dispersion 1.3 and 0.34 parts of dispersion 1.5 were added and mixed. In this blend 10.75 parts water were mixed.

An activator solution was prepared by blending 60.4 parts of Desmodur^{®} N 3600 (100% solids hexamethylenediisocyanate trimer from Bayer) with 39.6 parts of butyl glycol acetate.

100 parts of the above mentioned topcoat were mixed with 25.27 parts of the activator. The topcoat (45 µm) was sprayed on a PC/PBT panel with commercial primer surfacer (30 µm) and baked for 30 minutes at 80°C. A gloss (20°) of 79.7 was obtained and excellent adhesion both after cross cut test and high pressure cleaning.

### Paint Example 4 and Comparative Paint Example 1

### Water borne 2K white topcoats

A white topcoat formulation was prepared by mixing 29.79 parts of dispersion 1.4 into 69.59 parts of acrylate copolymer dispersion 2 and comparative resin example 4. To this blend 0.1 parts of a wetting agent (Byk^{®} 380N (Byk Chemie)) and 0.5 parts of a defoaming agent (Byk^{®} 011 (Byk Chemie) were added under mixing. A comparative white topcoat formulation was prepared by analogy, but with 69.59 part of comparative acrylate copolymer dispersion 4.

An activator solution was prepared by blending 30 parts of Desmodur^{®} N 3600 (100% solids hexamethylenediisocyanate trimer from Bayer) with 42 parts of Desmodur^{®} VP LS 2138 (80% solids isophorondiisocyanate allophanate from Bayer) and 28 parts of butyl glycol acetate.

In each case 100 parts of the above mentioned topcoat and comparative topcoat were mixed with 40 parts of the activator. Viscosity was adjusted to 28 seconds in a DIN4 cup by adding 14% water. The topcoat (50 µm) was sprayed in a dry film thickness of 50 µm on a steel panel coated with commercial primer surfacer (50 µm) and air dried. Results of the final paint shown below:

| **Graffiti Removal Test *** | | | | |
|---|---|---|---|---|
| | Gloss 20° | Swelling | Softening | Gloss Retention |
| Resin Example 2 | 84 | OK | OK | OK |
| Resin Comparative Example 4 | 47 | OK | OK | OK |

| | | | | |
|---|---|---|---|---|
| *Graffiti removal test was carried out according DB (Deutsche Bahn) specifications (TL 918 300 blatt39/4.11) 14 days after spraying. | | | | |

Paint based on comparative example 4 had low gloss and was not stable either.

### Paint Example 5

### Water borne 2K clear coat

A clear coat formulation was prepared by mixing 76.4 parts of acrylate copolymer dispersion 3 with 0.1 parts of a wetting agent (Byk^{®} 380N (Byk Chemie)), 0.5 parts of a defoaming agent (Byk^{®} 011 (Byk Chemie) and 23.2 parts of water.

An activator solution was prepared by blending 61.1 parts Desmodur^{®} N 3600 (100% solids hexamethylenediisocyanate trimer from Bayer) with 38.9 parts of butyl glycol acetate.

100 parts of the above mentioned clear coat were mixed with 31.8 parts of the activator. The clear coat (45 - 50 µm) was sprayed on a black coated steel panel and baked for 30 minutes at 80°C. The obtained clear coat had spray solids of 40.5%, Gloss (20°) of 83, excellent xylene resistance (after 3 minutes exposure) and a pendulum hardness (40 µm on glass) of 109 (1 hour after bake) and 140 (1 week after bake).

### Paint Examples 6, 7 and 8

### Water borne 2K clear coats

Three clear coat formulations were prepared by mixing acrylate copolymer dispersion 1, 3 and 4 each with butoxy propanol and water in ratios as in the table below. The mixtures were stored overnight.
An activator solution was prepared by blending 80 parts Desmodur^{®} XP2410 (100% solids asymmetric hexamethylenediisocyanate trimer from Bayer) with 20 parts of butyl glycol acetate.

The activator was added to the clear coats in weight ratios as below under stirring and the mixtures were stirred for 2 min at 1400 rpm with a 2,5cm cowless mixer. The clear coats viscosity was adjusted with water to 22-24 sec in a DIN4 cup. The clear coats were sprayed on a black coated steel panel and baked for 30 minutes at 80°C.

| Paint example | 6 | 7 | 8 |
|---|---|---|---|
| Resin example 1 | 59.6 | | |
| Resin example 3 | | 58.3 | |
| Resin example 4 | | | 60.4 |
| Butoxy propanol | 5.1 | 5.2 | 5.6 |
| Water | 12.6 | 13.5 | 15.3 |
| Desmodur^{®} XP2410-80% in Butyl glycol Acetate | 19.2 | 18.5 | 18.7 |
| Water | 3.5 | 4.5 | |

The obtained results of the clear coats are listed in the table below.

| Paint example | 6 | 7 | 8 |
|---|---|---|---|
| Solids content% | 42.10 | 40.50 | 41.00 |
| Gloss 20° / 60° | 82/91 | 83 / 91 | 69/90 |
| Haze | 64 | 46 | 225 |
| Xylene resistance* 1 hour after bake | 9 | 10 | 8 |
| König Pendulum 1 hour after bake | 106 | 109 | 101 |
| K6nig Pendulum 7 Days after bake | 148 | 140 | 143 |

| | | | |
|---|---|---|---|
| *3 minutes exposure, rating from 0 = worse to 10 = best | | | |

### Paint Example 9

### White water borne 2K basecoat for use under solvent borne clear coat

A white basecoat formulation was prepared by mixing 29.79 parts (w/w%) of pigment dispersion 1.4 into 69.59 parts of acrylate copolymer dispersion 3. To this blend 0.1 parts of a wetting agent (Byk^{®} 380N (Byk Chemie) and 0.5 parts of a defoaming agent (Byk^{®} 011 (Byk Chemie) were added.

An activator solution was prepared by blending 38 parts of Desmodur^{®} N 3600 (100% solids hexamethylenediisocyanate trimer from Bayer) with 54 parts of Desmodur^{®} VP LS 2138 (80% solids isophorondiisocyanate allophanate from Bayer) and 8 parts of butyl glycol acetate.

100 parts of the above mentioned topcoat were mixed with 40 parts of the activator. Viscosity was adjusted to 28 seconds in a DIN4 cup by adding 14% water. The basecoat (50 µm) was sprayed on a steel panel coated with commercial primer surfacer (50 µm) and baked for 1 hour at 60°C. This basecoat has a gloss (60°) of 60.

On top of the base coat a commercial solventborne clearcoat was sprayed (RK-69269 from DuPont, activated with AK 260 (DuPont) in a volume ratio 3/1). This clear was baked for 1 hour at 60°C. After bake the painted panel had a gloss (20°) of 90 and excellent adhesion results, both dry and after 10 days humidity cabinet.

Application of the clear coat after 1 day or 1 week without sanding of the base coat did give similar properties.

### Paint Examples 10, 11, and Comparative Examples 12

### Water borne 2K clear coats

Clear coat formulations were prepared by mixing acrylate copolymer dispersion 3 and 5, and comparative acrylate copolymer dispersion 3 each with butoxy propanol in ratios mentioned in the table below. The mixture was stored overnight.

An activator solution was prepared by blending 80 parts Desmodur^{®} XP2410 (100% solids asymmetric hexamethylenediisocyanate trimer from Bayer) with 20 parts of butyl glycol acetate.

The activator was added to the clear coats in ratios mentioned below under manual stirring. The viscosity of the clear coats viscosity was in a second step adjusted by addition of water to a spray viscosity of 19-21 sec in a DIN4 cup. The total amount of solvent in the ready-for-use mixture was 12% for all the combinations.

The clear coats were sprayed over a commercial black waterborne basecoat and baked for 30 minutes at 60°C.

| **(Comparative) Paint Example** | 10 | 11 | 12 |
|---|---|---|---|
| Resin example 3 | 90.5 | / | / |
| Resin example 5 | / | 85.98 | / |
| Resin comparative example 3 | / | / | 89.69 |
| Butoxy propanol | 9.5 | 14.02 | 10.31 |
| Desmodur^{®} XP2410-80% in | .01 | .68 | .36 |
| Butyl glycol acetate | | | |
| | | | |
| Water | .19 | .93 | .06 |

The table below gives an overview of the physical properties of the films applied in examples 10, 11, 12 and 13 :

| **(Comparative) Paint Example** | 10 | 11 | 12 |
|---|---|---|---|
| Dry film thickness (DFT) of clear coat | 42 | 45 | 40 |
| % spray solids | 38.3 | 36.6 | 36.8 |
| | | | |
| Gloss 20° | 85 | 85 | 66.5 |
| DOI | 86.7 | 89 | 82 |
| Dullness | 18.1 | 13.6 | 28.1 |
| | | | |
| Tack warm (initial) | 8 | 5-6 | 8 |
| Tack 1 hour | 8 | 5-6 | 8 |
| Tack 2 hours | 9 | 6-7 | 9 |
| | | | |
| Tape initial | 5.5 / 7 | 4 / 4-5 | 6 / 7 |
| Tape 1 hour | 6 / 9 | 4 / 7 | 6-5 / 9 |
| Tape 2 hours | 6.5 / 9 | 4 / 8 | 7/9 |
| | | | |
| D.T.A. initial | 7 / 8 | 5 / 5 | 7 / 8 |
| D.T.A. 1 hour | 9 / 9 | 6 / 7 | 9 / 9 |
| D.T.A. 2 hours | 9 / 8 | 6 / 8 | 9 / 9 |
| | | | |
| Fisher hardness measured | | | |
| On Glass (DFT 50 µm), | | | |
| baked 30 minutes at 80°C | | | |
| 4 hours after bake | 5.41 | 0.75 | 2.52 |
| 1 week after bake | 12.5 | 9.93 | 9.05 |

Comparative paint example 12 gave inferior gloss versus paint examples 10 and 11.

### Testing methods:

### Distinction of Image (D.O.I.) :

The D.O.I. values of the films have been determined with a WaveScan D-4816 apparatus from Byk Gardner.

### Drying/Tape Test :

After a 10 minutes cooldown period after baking a strip of masking tape is applied across the panel, smoothing it out manually using moderate firm pressure to insure uniform contact. A 2 kg weight is rolled over the tape to and from. After 10 minutes the tape is removed and the degree of marking is evaluated and rated. To get an idea of the recuperating capability, the tape imprint is evaluated again after 30 minutes. This process is repeated 1 hour and 2 hours after baking.

### Drying / Tack Test:

After a 10 minutes cooldown period after baking the film is touched with a 3M adhesive paper to check whether it is still tacky or not. This process is repeated 1 hour and 2 hours after baking.

### Drying / Dry to Assemble (D.T.A.) Test:

After a 10 minutes cooldown period after baking the thumb is firmly pressed (2 kg on a balance) against the film and twisted to an angle of 45 degrees. To get an idea of the recuperating capability of the film, a rating is given immediately after the impression and also after 30 minutes recovery. This process is repeated 1 hour and 2 hours after baking.

### Fisher Hardness

The films are evaluated 1 or 4 hours after baking and 1 week after baking with a Fisherscope H 100 micro-hardness tester. This method consists of applying a force to the surface of a coating through a pyramidal shaped diamond having specified face angles and converting the measurement of the resultant impression to a Knoop indentation hardness number.

### Gloss

Measured with Dr. Lange REF03 Reflektometer

### Haze

Measured with Wavescan DOI from Byk Gardener

## Claims

1. Aqueous coating composition comprising
A) at least one water-dilutable (meth)acrylate copolymer and
B) at least one polyisocyanate cross-linking agent with free isocyanate groups, wherein the (meth)acrylate copolymer comprises
a) 20-60% by weight of at least one reaction product of a monoepoxyester and an unsaturated acid functional monomer
b) 10-30% by weight of at least one hydroxy functional unsaturated monomer which is different from component a),
c) 2-6% by weight of at least one unsaturated acid functional monomer and
d) 20-50% by weight of at least one other polymerisable unsaturated monomer, wherein the % by weight of components a) to d) is adding up to 100% by weight and wherein the water-dilutable (meth)acrylate copolymer is free of vinyl esters derived from branched saturated monocarboxylic acids in alpha position and
wherein the (meth)acrylate copolymer is prepared by a skew feed polymerization process with at least two feed streams, wherein one feed stream comprises
I) 60-100% by weight of the reaction product of a monoepoxyester and an unsaturated acid functional monomer a), based on the total amount of component a) in the copolymer,
II) 0-60% by weight of the hydroxy functional unsaturated monomer b), based on the total amount of monomer b) in the copolymer,
III) 0-30% by weight of the unsaturated acid functional monomer c) based on the total amount of monomer c) in the copolymer, and
IV) 0-80% by weight of the other polymerisable unsaturated monomers d). based on the total amount of monomers d) in the copolymer,
wherein the remaining one or more feed streams comprise the balance of components a) to d) and wherein the first feed stream comprises 40-80 % by weight of the total amount of monomers a) to d) and the second feed stream comprises 20-60 % by weight of the total amount of monomers a) to d).

2. Aqueous coating composition of claim 1, wherein the water-dilutable (meth)acrylate copolymer A) has a hydroxy value of 30-250, an acid value of 15-50, and a number average molecular weight Mn of 1000-15000.

3. Aqueous coating composition of claim 1, wherein component a) is the reaction product of glycidyl esters derived from versatic acid and (meth)acrylic acid.

4. Aqueous coating composition of claim 1, wherein component c) is (meth)acrylic acid.

5. Aqueous coating composition of claim 1, wherein component d) comprises esters of unsaturated carboxylic acids with aliphatic monohydric alcohols with 1 to 20 C atoms and/or vinylaromatic monomers.

6. Aqueous coating composition of claim 1, wherein the (meth)acrylate copolymer A) comprises:
a) 20-60% by weight of at least one a reaction product of a monoepoxyester and (meth)acrylic acid
b) 10-30% by weight of at least one hydroxyalkyl ester with primary or secondary hydroxyl groups derived from alpha, beta-olefinic unsaturated monocarboxylic acids,
c) 2-6% by weight of at least one an unsaturated acid functional monomer and
d)
d1) 10-25% by weight of at least one ester of (meth)acrylic acid with aliphatic monohydric alcohols with 1 to 20 C atoms,
d2) 10-25% by weight of vinylaromatic monomers and
d3) optionally other monomers which are different from monomers d1) and d2)
wherein the% by weight of components a), b), c), d1), d2) and d3) is adding up to 100% by weight.

7. A process which comprises applying a multi-layer coating on a substrate using a coating composition according to claim 1 and curing said coating.

8. A process for multi-layer coating of substrates by applying a topcoat layer to a substrate pre-coated with one or more coating layers, wherein the topcoat layer is composed of a color-and/or special effect-imparting base coat coating compound and a clear coat coating compound is applied and wherein the clear coating layer is composed of a coating composition according to claim 1.

9. A process for multi-layer coating of substrates by applying a topcoat layer to a substrate pre-coated with one or more coating layers, wherein the topcoat layer composed of a pigmented one-layer topcoat coating compound is applied, and wherein the pigmented one-layer topcoat coating layers is composed of a coating composition according to claim 1.

10. The process according to claim 7, 8 or 9, wherein said process is a process for automotive and industrial coating.

11. The process according to claim 10, wherein said process is a process for coating automotive bodies, automotive body parts, large vehicles and transportation vehicles.

## Patentansprüche

1. Wässrige Beschichtungszusammensetzung, die aufweist:
A) mindestens ein wasserverdünnbares (Meth)acrylat-Copolymer und
B) mindestens ein Polyisocyanat-Vernetzungsmittel mit freien Isocyanatgruppen,
wobei das (Meth)acrylat-Copolymer aufweist:
a) 20-60 Gew.-% mindestens eines Reaktionsprodukts aus einem Monoepoxyester und einem ungesättigten säurefunktionellen Monomer,
b) 10-30 Gew.-% mindestens eines hydroxyfunktionellen ungesättigten Monomers, das sich von Komponente a) unterscheidet,
c) 2-6 Gew.-% mindestens eines ungesättigten säurefunktionellen Monomers und
d) 20-50 Gew.-% mindestens eines anderen polymerisierbaren ungesättigten Monomers, wobei sich die Gewichtsanteile in Gew.-% der Komponenten a) bis d) zu 100 Gew.-% addieren, und
wobei das wasserverdünnbare (Meth)acrylat-Copolymer frei von Vinylestern ist, die von verzweigten gesättigten alpha-ständigen Monocarbonsäuren abgeleitet sind, und
wobei das (Meth)acrylat-Copolymer durch einen asymmetrischen Polymerisationsprozess mit mindestens zwei Zuflüssen hergestellt wird, wobei ein Zufluß aufweist:
I) 60-100 Gew.-% des Reaktionsprodukts eines Monoepoxyesters und eines ungesättigten säurefunktionellen Monomers a), bezogen auf den Gesamtanteil der Komponente a) in dem Copolymer,
II) 0-60 Gew.-% des hydroxyfunktionellen ungesättigten Monomers b), bezogen auf den Gesamtanteil des Monomers b) in dem Copolymer,
III) 0-30 Gew.-% des ungesättigten säurefunktionellen Monomers c), bezogen auf den Gesamtanteil des Monomers c) in dem Copolymer, und
IV) 0-80 Gew.-% der anderen polymerisierbaren ungesättigten Monomere d), bezogen auf den Gesamtanteil des Monomers c) in dem Copolymer,
wobei der eine oder die mehreren übrigen Zuflüsse den Rest der Komponenten a) bis d) aufweisen, und wobei der erste Zufluss 40-80 Gew.-% des Gesamtanteils der Monomere a) bis d) aufweist und der zweite Zufluss 20-60 Gew.-% des Gesamtanteils der Monomere a) bis d) aufweist.

2. Wässrige Beschichtungszusammensetzung nach Anspruch 1, wobei das wasserverdünnbare (Meth)acrylat-Copolymer A) eine Hydroxylzahl von 30-250, eine Säurezahl von 15-50 und ein zahlengemitteltes Molekulargewicht Mn von 1000-15000 aufweist.

3. Wässrige Beschichtungszusammensetzung nach Anspruch 1, wobei die Komponente a) das Reaktionsprodukt von Glycidylestem ist, die von Versatic-Säure und (Meth)acrylsäure abgeleitet sind.

4. Wässrige Beschichtungszusammensetzung nach Anspruch 1, wobei die Komponente c) (Meth)acrylsäure ist.

5. Wässrige Beschichtungszusammensetzung nach Anspruch 1, wobei die Komponente d) Ester von ungesättigten Carbonsäuren mit aliphatischen einwertigen Alkoholen mit 1 bis 20 C-Atomen und/oder vinylaromatischen Monomeren aufweist.

6. Wässrige Beschichtungszusammensetzung nach Anspruch 1, wobei das (Meth)acrylat-Copolymer A) aufweist:
a) 20-60 Gew.-% mindestens eines Reaktionsprodukts aus einem Monepoxyester und (Meth)acrylsäure,
b) 10-30 Gew.-% mindestens eines Hydroxyalkylesters mit primären oder sekundären Hydroxylgruppen, die von α,β-olefinischen ungesättigten Monocarbonsäuren abgeleitet sind,
c) 2-6 Gew.-% mindestens eines ungesättigten säurefunktionellen Monomers und
d)
d1) 10-25 Gew.-% mindestens eines Esters von (Meth)acrylsäure mit aliphatischen einwertigen Alkoholen mit 1 bis 20 C-Atomen,
d2) 10-25 Gew.-% vinylaromatische Monomere und
d3) wahlweise andere Monomere, die sich von den Monomeren d1) und d2) unterscheiden, wobei die Gew.-% der Komponenten a), b), c), d1), d2) und d3) sich zu 100 Gew.-% addieren.

7. Verfahren, mit Aufbringen einer mehrlagigen Beschichtung auf ein Substrat unter Verwendung einer Beschichtungszusammensetzung nach Anspruch 1 und Aushärten der Beschichtung.

8. Verfahren zur mehrlagigen Beschichtung von Substraten durch Auftragen einer Deckschicht auf ein mit einer oder mehreren Überzugsschichten vorbeschichtetes Substrat, wobei die Deckschicht aus einer Farbe und/oder einen Spezialeffekt verleihenden Grundschicht-Beschichtungsmasse besteht und eine Klarlack-Beschichtungsmasse aufgebracht wird, und wobei die Klarlackschicht aus einer Beschichtungszusammensetzung nach Anspruch 1 besteht.

9. Verfahren zur mehrlagigen Beschichtung von Substraten durch Auftragen einer Deckschicht auf ein mit einer oder mehreren Überzugsschichten vorbeschichtetes Substrat, wobei die aus einer pigmentierten einlagigen Deckschicht-Beschichtungsmasse bestehende Deckschicht aufgetragen wird, und wobei die Überzugsschichten der pigmentierten einlagigen Deckschicht aus einer Beschichtungszusammensetzung nach Anspruch 1 bestehen.

10. Verfahren nach Anspruch 7, 8 oder 9 , wobei das Verfahren ein Verfahren für Kraftfahrzeug- und Industrielackierung ist

11. Verfahren nach Anspruch 10, wobei das Verfahren ein Verfahren für die Beschichtung von Autokarosserien, Autokarosserieteilen, Großfahrzeugen und Transportfahrzeugen ist.

## Revendications

1. Composition aqueuse de revêtement comprenant
A) au moins un copolymère de (méth)acrylate pouvant être dilué dans l'eau et
B) au moins un agent de réticulation du type polyisocyanate avec des groupes isocyanates libres, dans laquelle le copolymère de (méth)acrylate comprend
a) 20 à 60 % en poids d'au moins un produit réactionnel d'un monoépoxyester et d'un monomère insaturé à fonctionnalité acide
b) 10 à 30 % en poids d'au moins un monomère insaturé à fonctionnalité hydroxyle qui est différent du composant a)
c) 2 à 6 % en poids d'au moins un monomère insaturé à fonctionnalité acide et
d) 20 à 50 % en poids d'au moins un autre monomère insaturé polymérisable,
dans laquelle les % en poids des composants a) à d) se cumulent jusqu'à 100% en poids et
dans laquelle le copolymère de (méth)acrylate pouvant être dilué dans l'eau est exempt d'esters de vinyle dérivés d'acides monocarboxyliques saturés ramifiés en position alpha et
dans laquelle le copolymère de (méth)acrylate est préparé par l'intermédiaire d'un procédé de polymérisation à alimentation oblique avec au moins deux écoulements d'alimentation, dans laquelle un écoulement d'alimentation comprend
I) 60 à 100 % en poids du produit réactionnel d'un monoépoxyester et d'un monomère insaturé à fonctionnalité acide a), basés sur la quantité totale du composant a) dans le copolymère,
II) 0 à 60 % en poids du monomère insaturé à fonctionnalité hydroxyle b), basé(s) sur la quantité totale du monomère b) dans le copolymère,
III) 0 à 30 % en poids du monomère insaturé à fonctionnalité acide c), basé(s) sur la quantité totale du monomère c) dans le copolymère, et
IV) 0 à 80 % en poids des autres monomères insaturés polymérisables d), basée(s) sur la quantité totale des monomères d) dans le copolymère,
dans laquelle le un ou plusieurs écoulement(s) d'alimentation restant comprend (comprennent) le reste des composants a) à d) et dans laquelle le premier écoulement d'alimentation comprend 40 à 80 % en poids de la quantité totale des monomères a) à d) et le second écoulement d'alimentation comprend 20 à 60 % en poids de la quantité totale des monomères a) à d).

2. Composition aqueuse de revêtement selon la revendication 1, dans laquelle le copolymère de (méth)acrylate pouvant être dilué dans l'eau A) a un indice de groupe hydroxyle de 30 à 250, un indice d'acidité de 15 à 50 et un poids moléculaire moyen en nombre Mn de 1 000 à 15 000.

3. Composition aqueuse de revêtement selon la revendication 1, dans laquelle le composant a) est le produit réactionnel d'esters de glycidyle dérivés d'acide versatique et d'acide (méth)acrylique.

4. Composition aqueuse de revêtement selon la revendication 1, dans laquelle le composant c) est l'acide méthacrylique.

5. Composition aqueuse de revêtement selon la revendication 1, dans laquelle le composant d) comprend des esters d'acides carboxyliques insaturés avec des alcools monohydriques aliphatiques avec 1 à 20 atome(s) de carbone et/ou des monomères de vinyle aromatiques.

6. Composition aqueuse de revêtement selon la revendication 1, dans laquelle le copolymère de (méth)acrylate A) comprend :
a) 20 à 60 % en poids d'au moins un produit réactionnel d'un monoépoxyester et d'acide (méth)acrylique,
b) 10 à 30 % en poids d'au moins un ester d'hydroxyalkyle avec des groupes hydroxyle primaires ou secondaires dérivés d'acides monocarboxyliques insaturés alpha, béta-oléfiniques,
c) 2 à 6 % en poids d'au moins un monomère insaturé à fonctionnalité acide et
d)
d1) 10 à 25 % en poids d'au moins un ester d'acide (méth)acrylique avec des alcools monohydriques aliphatiques avec 1 à 20 atomes de carbone,
d2) 10 à 25 % en poids de monomères de vinyle aromatiques et
d3) optionnellement d'autres monomères qui sont différents des monomères d1) et d2) dans laquelle les % en poids des composants a), b), c), d1), d2) et d3) se cumulent pour atteindre 100 % en poids.

7. Procédé qui comprend l'application d'un revêtement multicouche sur un substrat utilisant une composition de revêtement selon la revendication 1 et le durcissement dudit revêtement.

8. Procédé de revêtement multicouche de substrats par l'application d'une couche de revêtement supérieur à un substrat pré-revêtu avec une ou plusieurs couche(s) de revêtement, dans lequel la couche de revêtement supérieur est composée d'un composé de revêtement de couche de base coloré et/ou conférant un effet spécial et un composé de revêtement de couche claire est appliqué et dans lequel la couche de revêtement claire est composée d'une composition de revêtement selon la revendication 1.

9. Procédé de revêtement multicouche de substrats par l'application d'une couche de revêtement supérieur à un substrat pré-revêtu d'une ou plusieurs couche(s) de revêtement, dans lequel la couche de revêtement supérieur composée d'un composé de revêtement de couche supérieure monocouche pigmentée est appliquée, et dans lequel les couches de revêtement de couche supérieure monocouche pigmentée est composée d'une composition de revêtement selon la revendication 1.

10. Procédé selon la revendication 7, 8 ou 9, dans lequel ledit procédé est un procédé de revêtement automobile et industriel.

11. Procédé selon la revendication 10, dans lequel ledit procédé est un procédé de revêtement de carrosseries automobiles, de pièces de carrosserie automobile, de grands véhicules et de véhicules de transport.
